# EUROPEAN PATENT APPLICATION

(11) **EP 2 143 336 A1**
(43) Date of publication of application: **13.01.2010**
(21) Application number: 08012295.5
(22) Date of filing: 08.07.2008
(51) Int. Cl.: A23G 4/20, A23G 4/12, A23G 3/54

(54) **Powdered chewing gum compositions, the use thereof and a method for preparing such compositions**

(71) Applicant: Alsiano A/S, 3460 Birkerød (DK)
(72) Inventor: Kusk, Tage Vedsted, 4672 Klippinge (DK); Hummeluhr, Jens, 2920 Charlottenlund (DK); Andresen, Otto, 3660 Stenløse (DK)
(74) Representative: Zeuthen-Aagaard, Henrik

(57) **Abstract**

The present invention relates to a powdered chewing gum composition, which contains over 50% w/w gum base having a softening point between 50°C and 65°C and wherein at least 95% w/w of the particles of the composition have a particle size of less than 1000 micron in diameter. The present invention also relates to the use of said powdered chewing gum composition. The present invention also relates to a chewing gum comprising a) a core compartment, b) one or more layers containing over 50% w/w gum base having a softening point between 50°C and 65°C. The present invention further relates to a method for production of said chewing gum comprising the steps of:
(a) providing a core composition; and
(b) coating of the core composition with a powdered chewing gum composition by use of a panning process; and optionally
(c) coating the outer intermediate layer with an outer finishing layer by use of a panning process.

## Description

### Technical field

The present invention relates to powdered chewing gum compositions, the use of such compositions, and a method for preparing such compositions.

### Background of the invention

Production of chewing gum has traditionally been carried out using expensive and dedicated production equipment, which due to the nature of the processes employed, requires large investments. It has therefore hitherto only been profitable to produce chewing gum in large production units. As a result, there are very few chewing gum producers in the world.

In the later years, it has become possible to produce chewing gum tablets by compressing of powdered chewing gum. This is carried out in tabletting machines, which is standard equipment in the pharmaceutical industry, but normally not available to the confectionery industry. Accordingly, there is a need for an alternative production method for producing chewing gum from powdered chewing gum that can be carried out with equipment widely available in small as well as large companies in the confectionery industry, and not requiring heavy investment in expensive apparatus.

Such a method has been described briefly in EP 0814 670 B1. The method uses conventional panning equipment, which is widespread in the confectionery industry, as well as in the pharmaceutical industry. The applicants have, however, observed that said method has a low production yield when carried out with commonly available powdered chewing gum base. The low yield is caused by poor adherence of the gum particles to the centres being coated. Instead, the gum base accumulates on the walls of the panning apparatus.

US 6,551,634 B2 discloses chewing or bubble gum pieces comprising a flavouring containing core, an intermediate gummy mass free layer which encapsulates the core, and an outer layer which is an outer layer of a gum piece that is placed in the mouth of a person chewing the gum and contains gummy mass, the outer layer encapsulating the intermediate layer. The outer gummy mass containing layer is applied as a pulverised material. The chewing or bubble gum pieces may comprise a core, which instead of or as a supplement to the flavourings contains medicine mass.

In US 6,558,722 B2, a gum base composition is applied containing between about 5 and about 40% pure gum base. It is mentioned that "if too much dry charge is applied to the wetted cores, the overload of dry charge collects in the back of the pan." It is never specified in a quantitative way what "too much" means. It is therefore implicitly suggested that it is problematic to carry out the application of the dry charge with said gum base composition.

Accordingly, there is still a need in the art for alternative powdered chewing gum compositions that are suitable for production of chewing gum by panning.

Accordingly, an object of the present invention is to provide alternative chewing gum compositions and alternative means of producing chewing gum, and to provide use of the compositions for producing chewing gum.

### Summary of the invention

The applicants have now surprisingly observed that by increasing the content of pure gum base in a powdered gum base composition to more than 50% w/w, said poor adherence of the gum particles to the chewing gum centres being coated in a standard panning process is avoided.

Thus, the present invention relates to a composition containing gum base which can be applied for coating of any edible and chewable centres in a repeated panning process. The composition contains over 50% w/w of pure gum base, preferably more than 65% w/w of pure gum base, more preferably more than 75% w/w of pure gum base, said gum base optionally having a softening point between 50°C and 65°C, preferably 60°C, said composition being a powder which is free flowing at temperatures between 5°C and 30°C.

Preferably, the compositions according to the invention contain up to 100% but at least 50% w/w of pure gum base, such as at least 51% w/w, such as at least 52%, at least 53%, at least 54%, at least 55% w/w, such as at least 56%, at least 57%, at least 58%, or at least 59% w/w of pure gum base.

Even more preferably, the compositions according to the invention contain up to 100% but at least 60% w/w of pure gum base, such as at least 61% w/w, such as at least 62%, at least 63%, at least 64%, at least 65% w/w, such as at least 66%, at least 67%, at least 68%, or at least 69% w/w of pure gum base.

Even more preferably, the compositions according to the invention contain up to 100% but at least 70% w/w of pure gum base, such as at least 71 % w/w, such as at least 72%, at least 73%, at least 74%, at least 75% w/w, such as at least 76%, at least 77%, at least 78%, or at least 79% w/w of pure gum base.

Even more preferably, the compositions according to the invention contain up to 100% but at least 80% w/w of pure gum base, such as at least 81% w/w, such as at least 82%, at least 83%, at least 84%, at least 85% w/w, such as at least 86%, at least 87%, at least 88%, or at least 89% w/w of pure gum base.

Said powdered chewing-gum base may contain other ingredients well known in the art, such as flow-improving agents, antioxidants, colourants, flavours, sugars or sugar replacers, e.g. bulk sweeteners, polyols, complex sugars. As examples of flow-improving agents can be mentioned talc, silica, magnesium stearate, gum arabic and the like. Well known antioxidants include BHT, tocopherol, sodium erythorbate etc.

In order to accommodate additional ingredients in the gum base mix compositions, the compositions according to the invention in a preferred embodiment contain less than 100% w/w of pure gum base, such as less than 99% w/w, such as less than 98%, less than 97%, less than 96%, less than 95% w/w, such as less than 94%, less than 93%, less than 92%, or less than 91 % w/w of pure gum base.

In order to be applicable in the panning process, over 95% w/w (dry weight) of the particles of said free flowing powder must be below 1000 micron. Preferably, more than 90% of the particles must be between 150 and 250 micron.

### Definitions:

The term "gum base" as used herein means the ingredient that differentiates chewing gum from all other confectionery products. This elastic and non-water soluble substance has properties that enable it to be chewed for a long time without experiencing substantial changes. Gum base may be made of; natural resins, synthetic resins, elastomers, waxes, emulsifier, antioxidants, fat, fillers, or any other suitable material.

The term "softening point" as used herein refers to a temperature measured by the Ring-and-Ball assay known in the art.

The term "free flowing" as used herein in relation to a powder means that said powder moves like a liquid when poured.

The term "flow-improving agent" as used herein means any substance which may be added to a powder in order to make it free flowing.

The term "standard panning apparatus" as used herein refers to apparatus for panning as e.g. the Driacoater produced by Driam GmbH, various coating pans produced by A.M.P-Rose in the U.K., and others. A "panning process" is defined as a process for making e.g. chewing gum in which layers are slowly deposited onto a core by spinning the chewing gum in a horizontally-mounted pan also know as a "standard panning apparatus". The process is well known to the person skilled in the art.

The term "cut-size" as used herein means the non-soluble part which remains after all other ingredients contained in the original chewing gum piece have been dissolved by chewing.

By w/w is meant the weight based on dry weight.

### Detailed description of the invention

The applicants have surprisingly observed that by increasing the content of pure gum base in a powdered gum base composition to more than 50% w/w, the aforementioned poor adherence of the gum particles to the chewing gum centres being coated is avoided. Thus, the present invention relates to a powdered chewing gum composition, containing over 50% w/w gum base having a softening point between 50°C and 65°C, wherein at least 95% w/w of the particles of the composition have a particle size of less than 1000 micron.

Best results were seen when the compositions contained between 50% w/w and 90% w/w gum base. Even better results were seen when the compositions contained between 65% w/w and 85% w/w gum base.

It is preferred that the gum base used in the compositions according to the invention has a softening point of 58 - 62°C, because a softening point lower than 58°C makes the powder preparation sticky at the process temperature, reducing the desired free flowability. A softening point higher than 62°C makes the final gum uncomfortably hard to chew.

In order to be applicable in the panning process, over 95% w/w of the particles of said free flowing powder must be below 1000 micron in diameter. To secure that the major part of the gum base powder is deposited on the centres, and that the resulting coating is smooth and even, it is preferred that at least 90% w/w of the particles of the composition according to the invention have a particle size between 150 and 250 micron. Even more preferably, at least 91% w/w, such as at least 92%, at least 93%, at least 94%, at least 95% w/w, such as at least 96%, at least 97%, at least 98% of the particles of the composition according to the invention should have a particle size between 150 and 250 micron.

It is preferred that the composition according to the invention is a powder which is free flowing at temperatures between 5°C and 30°C.

The powdered chewing gum base may contain other ingredients well known in the art, such as flow-improving agents, antioxidants, colourants, flavours, sugars or sugar replacers, e.g. bulk sweeteners, polyols or complex sugars. As examples of flow-improving agents can be mentioned talc, silica, magnesium stearate, gum arabic and the like. Well known antioxidants include BHT, tocopherol, sodium erythorbate etc.

Flow-improving agents may include talc, silica, silicate types such as magnesium and aluminumsilicate, titanium dioxide, magnesium stearate, gum arabic, and other suitable flow-improving agents and/or combinations thereof.

The composition according to the present invention may contain at least one flow-improving agent, said flow-improving agent being used in an amount greater than about 1 % w/w, preferably greater than about 5% w/w, more preferably greater than about 10% w/w.

Bulk sweeteners are well-known in the art and may include both sugar and sugarless sweeteners and components, or combinations thereof. Sugar sweeteners may include saccharide containing components including, but not limited to, sucrose, glucose, maltose, maltodextrin, dried invert sugar, fructose, lactose, dried glucose syrups, and the like, alone or in combination. Sugarless sweeteners include components with sweetening characteristics but devoid of the commonly known sugars. Sugarless sweeteners may include, but are not limited to, sugar alcohols such as sorbitol, mannitol, xylitol, hydrogenated starch hydrolysates, malititol and the like, alone or in combination. Further, high intensity sweeteners, such as aspartame, saccharin and its salts, sucralose, stevioside, thaumatin, cyclamic acid and its salts, acesulfame and its salts, or any other suitable sweetener, alone or in combination.

Bulking agents may include sugars or sugar alcohols which also provide sweetness to the product. However, since such materials are caloric, they may also be substituted with low-caloric bulking agents. Low caloric bulking agents may include Raftilose, Raftilin, Fructooligosaccarides (NutraFlora), Palatinose oligosaccaride, Guar Gum Hydrosylate (Sun Fiber), or indigestible dextrin (Fibersol), or any other suitable low caloric bulking agent.

The compositions according to the present invention may contain a bulking agent and/or sweetening agent, said bulking and/or sweetening agent being used in an amount greater than about 1% w/w but not greater than 49%, preferably greater than about 10% w/w but not greater than 49%, more preferably greater than about 25% w/w but not greater than 49%, most preferred greater than about 35% w/w but not greater than 49%.

Colourants provide the desired colour characteristics or remove any undesired colour by whitening the gum portion of the coating. Powdered or liquid colouring agents may optionally be added during mixing of the powdered gum. Colourants and whiteners may include, but are not limited to, fruit and vegetable extracts, titanium dioxide, rice starch or mixtures and/or dispersions thereof.

Flavouring agents may include essential oils, synthetic flavours or mixtures thereof including, but not limited to, flavouring aromatics, oleo resins, extracts derived from plants, leaves, flowers, fruits and so forth, and combinations thereof as known by those ordinarily skilled in the art. Flavour oils may include, but are not limited to, oils derived from plants and fruits, peppermint oil, spearmint oil, cinnamon oil, other mint oils, clove oil, oil of wintergreen, anise and the like. Also useful are artificial or natural fruit flavours such as citrus oils including lemon, orange, grape, lime and grapefruit and fruit essences including apple, strawberry, cherry, pineapple and so forth. Natural and artificial flavouring agents may be combined in any sensorial acceptable fashion.

The composition according to the present invention may contain a flavouring agent, said flavouring agent being used in an amount greater than about 0.1 % w/w, preferably greater than about 2% w/w, more preferably greater than about 5% w/w. Thus, in a preferred embodiment the flavouring agent is used in an amount of between 0.1 % w/w and 10% w/w, preferably between about 2% w/w, more preferably greater than about 5% w/w to about 10% w/w.

Particularly, in one aspect, the invention relates to a composition consisting essentially of:
a) 50% w/w to about 99% w/w gum base,
b) about 1% w/w to about 45% w/w bulking and/or sweetening agent
c) about 0.1 % w/w to about 10% w/w flavouring agent,
d) about 1% w/w to about 30% w/w talc, and optionally
e) about 0.1% w/w to about 20% w/w of a further flow improving agent

In another aspect, the invention relates to a chewing gum comprising at least two distinct layers, wherein at least one layer contains a composition according to the invention.

In another aspect, the invention relates to a chewing gum comprising a) a core compartment, b) one or more intermediate layer compartments, and c) an outer layer compartment. Such chewing gums are commonly referred to as centre-filled chewing gums. According to this aspect of the invention, at least one of the intermediate layer compartments contain a composition according to the invention.

Thus, in one aspect the invention relates to a chewing gum comprising a) a core compartment, and b) one or more layers containing over 50% w/w gum base having a softening point between 50°C and 65°C.

In the centre filled chewing gums according to the invention, the edible, chewable core compartment may comprise one or more compounds selected from confectioneries, nuts, dried or fresh fruits, flavourings, active pharmaceutical ingredients (API's), or nutraceutical supplements, such as but not limited to, prebiotics, probiotic bacteria, caffeine, guarana, vitamins, minerals and enzymes.

The one or more intermediate compartments may comprise a solution acting as a glue (sugar containing or sugar free), and may further comprise flavour and colour, gum arabic, fine sugar or polyols for smoothening or a sealing component with a low permeability. However, at least one of the intermediate compartments must comprise a composition according to the invention.

The outer layer compartment preferably comprises no gum base but is a finishing of the product for visual impact and/or a sealing of the product to reduce moisture absorption in order to improve shelf life. The outer layer may contain sugar and/or polyols, gum arabic, CMC, wax, fat, flavour and colour.

The present invention further comprises the use of a powdered chewing gum composition for coating a confectionery, a nutraceutical supplement, or an active pharmaceutical ingredient. The coating may be carried out in a standard panning apparatus such as a traditional coating pan or in a continuously operating pan. The process is well known in the industry and can be described as multiple layers on a centre. The layers are smoothened and compacted by the movement in the rotating pan by friction. First a liquid solution of sugars / polyols and other ingredients and processing aids is added while the pan is rotating. When all the centres are wetted, the powder material is added. The powder will stick to the wetted centres. When the centres are saturated with powder, they are wetted again and further powder material is added. This process is repeated until the desired weight is reached.

Accordingly, in another aspect, the invention relates to a method for production of a chewing gum according to the invention, the method comprising the steps of:
(a) providing a core composition; and
(b) coating of the core composition with a composition according to the invention characterised in that it contains over 50% w/w gum base having a softening point between 50°C and 65°C and further **characterised in that** at least 95% w/w of the particles of the composition have a particle size of less than 1000 micron in diameter by use of a panning process; and optionally
(c) coating the outer intermediate layer with an outer finishing layer by use of a panning process.

### Examples

Any specifications herein are merely illustrative of the principles of the present invention, and are not to be seen as limiting in any way.

The aim of the experiments was to produce a piece of chewing gum with a gum base powder via a standard coating process. The chewing gum should have a good chewability compared to standard chewing gum. A coating procedure was carried out in a 9-inch traditional stainless steel coating pan (standard panning apparatus).

In the coating is used the following coating materials and centres.

### Soft coating glue (liquid):

1500 g maltitol syrup 75% dry substance (d.s.) (Maltisorb 75/75 Roquette Freres)
60 g gum Arabic 396-I (Instant Senegal quality, Alland & Robert)
30 g food grade titanium dioxide
Heat under stirring to 70°C, and keep at this temperature.

### Pre-gumming;

Pre-gumming is a coating step where cracks and un-even surfaces are smoothened for a better performance of the coating procedure and the over-all impression.
Pre-gumming is performed by adding a gum arabic solution (40% d.s. w/w) and dusting with Maltisorb P35 (maltitol crystalline in fine particles - average 35 micron).
The pre-gumming will also lower the migration of water from the centre (and into the centre) in-between the different coating materials.

### Hard coating (top coating):

1040 g maltitol powder (Maltisorb P200, Roquette Freres)
15 g gum Arabic 396-I (Instant Senegal quality, Alland & Robert)
20 g food grade titanium dioxide
460 g water

Dissolve by stirring, and heat under stirring to 80°C

### Gum base powder mix 1 (according to the invention) used in example 1.

Gum Base Powder 1525 from Gum Base Company, Italy; a gum base powder containing maltitol, gum Arabic 80%. The product is produced according to inventor specifications.

### Gum base powder mix 2 (standard commercially available) used in example 2.

All in Gum - Sugar Free (SF), Cafosa - a gum base powder containing 24-26% gum base and 74-76 sorbitol powder, flavour and colour free. Commercially available at Cafosa, Barcelona, Spain.

### Centres.

1.500 gram soft compressed tablets, 10 mm diameter, weight 0,65 g each.

### Example 1.

During 3.5 hours of active coating time 33 layers are applied according to table 1.

The resulting tablets have a 60/40 ratio between centre and coating.

The gum content is around 80% of the coating, resulting in final cut-size of 1.0 gram.

**Table 1.**

| Time (Minutes) | Product | Amount (grams) | Comments | Layer Number |
|---|---|---|---|---|
| 0:00 | Gum Acacia solution 40% d.s. | 25 | Pre gumming | 1. pre-layer |
| 0:01 | Maltisorb P35 | 100 | | |
| 0:05 | Gum Acacia solution 40% d.s. | 25 | | 2. pre-layer |
| 0:06 | Maltisorb P35 | 100 | | |
| 0:08 | Maltisorb P35 | 100 | | |
| 0:14 | Maltisorb P35 | 50 | Pause for 2 hours | |
| 0 (after pause) | Maltisorb 75/75 | 10 | Gum coating | 1. layer |
| 0:01 | Gum Base 1525 | 25 | | |
| 0:04 | Maltisorb 75/75 | 10 | | 2. layer |
| 0:06 | Maltisorb 75/75 | 10 | | |
| 0:07 | Gum Base 1525 | 25 | | |
| 0:12 | Gum Base 1525 | 25 | | |
| 0:15 | Maltisorb 75/75 | 10 | | 3. layer |
| 0:16 | Gum Base 1525 | 25 | | |
| 0:20 | Maltisorb 75/75 | 15 | | 4. layer |
| 0:21 | Gum Base 1525 | 25 | | |
| 0:25 | Maltisorb 75/75 | 15 | | 5. layer |
| 0:27 | Gum Base 1525 | 25 | | |
| 0:29 | Gum Base 1525 | 30 | | |
| 0:32 | Maltisorb 75/75 | 15 | | 6. layer |
| 0:34 | Gum Base 1525 | 30 | | |
| 0:36 | Maltisorb 75/75 | 15 | | 7. layer |
| 0:37 | Gum Base 1525 | 30 | | |
| 0:40 | Gum Base 1525 | 30 | | |
| 0:43 | Maltisorb 75/75 | 15 | | 8. layer |
| 0:44 | Gum Base 1525 | 30 | | |
| 0:47 | Maltisorb 75/75 | 15 | | 9. layer |
| 0:49 | Gum Base 1525 | 30 | | |
| 0:52 | Maltisorb 75/75 | 20 | | 10. layer |
| 0:53 | Menthol powder 80% | 10 | | |
| 0:54 | Gum Base 1525 | 40 | | |
| 1:00 | Maltisorb 75/75 | 20 | | 11. layer |
| 1:01 | Gum Base 1525 | 40 | | |
| 1:05 | Maltisorb 75/75 | 20 | | 12. layer |
| 1:08 | Gum Base 1525 | 40 | | |
| 1:12 | Maltisorb 75/75 | 20 | | 13. layer |
| 1:14 | Gum Base 1525 | 40 | | |
| 1:16 | Maltisorb 75/75 | 20 | | 14. layer |
| 1:17 | Gum Base 1525 | 40 | | |
| 1:19 | Gum Base 1525 | 40 | | |
| 1:22 | Maltisorb 75/75 | 20 | | 15. layer |
| 1:23 | Gum Base 1525 | 40 | | |
| 1:24 | Gum Base 1525 | 40 | | |
| 1:26 | Maltisorb 75/75 | 20 | | 16. layer |
| 1:27 | Gum Base 1525 | 40 | | |
| 1:29 | Gum Base 1525 | 40 | | |
| 1:31 | Maltisorb 75/75 | 20 | | 17. layer |
| 1:32 | Gum Base 1525 | 40 | | |
| 1:34 | Gum Base 1525 | 40 | | |
| 1:36 | Maltisorb 75/75 | 25 | | 18. layer |
| 1:37 | Gum Base 1525 | 40 | | |
| 1:38 | Peppermint flavour | 10 | | 19. layer |
| 1:39 | Gum Base 1525 | 40 | | |
| 1:40 | Gum Base 1525 | 40 | | |
| 1:41 | Gum Base 1525 | 40 | | |
| 1:47 | Maltisorb 75/75 | 25 | | 20. layer |
| 1:48 | Gum Base 1525 | 40 | | |
| 1:50 | Gum Base 1525 | 40 | | |
| 1:52 | Maltisorb 75/75 | 25 | | 21. layer |
| 1:53 | Gum Base 1525 | 40 | | |
| 1:55 | Gum Base 1525 | 40 | | |
| 1:57 | Maltisorb 75/75 | 25 | | 22. layer |
| 1:59 | Gum Base 1525 | 40 | | |
| 2:00 | Gum Base 1525 | 40 | | |
| 2:02 | Maltisorb 75/75 | 30 | | 23. layer |
| 2:04 | Splenda (sucralose) | 4 | | |
| 2:05 | Gum Base 1525 | 40 | | |
| 2:06 | Gum Base 1525 | 40 | | |
| 2:08 | Maltisorb 75/75 | 30 | | 24. layer |
| 2:09 | Gum Base 1525 | 40 | | |
| 2:10 | Gum Base 1525 | 40 | | |
| 2:12 | Gum Base 1525 | 40 | | |
| 2:14 | Maltisorb 75/75 | 30 | | 25. layer |
| 2:15 | Gum Base 1525 | 40 | | |
| 2:16 | Gum Base 1525 | 40 | | |
| 2:19 | Maltisorb 75/75 | 30 | | 26. layer |
| 2:20 | Gum Base 1525 | 40 | | |
| 2:21 | Gum Base 1525 | 40 | | |
| 2:24 | Gum Base 1525 | 40 | | |
| 2:26 | Maltisorb 75/75 | 30 | | 27. layer |
| 2:27 | Menthol powder 80% | 10 | | |
| 2:28 | Gum Base 1525 | 40 | | |
| 2:29 | Gum Base 1525 | 40 | | |
| 2:32 | Maltisorb 75/75 | 30 | | 28. layer |
| 2:33 | Gum Base 1525 | 40 | | |
| 2:34 | Gum Base 1525 | 40 | | |
| 2:37 | Peppermint flavour | 10 | | 29. layer |
| 2:38 | Gum Base 1525 | 40 | | |
| 2:39 | Gum Base 1525 | 40 | | |
| 2:40 | Gum Base 1525 | 40 | | |
| 2:41 | Gum Base 1525 | 40 | | |
| 2:43 | Gum Base 1525 | 40 | | |
| 2:46 | Maltisorb 75/75 | 30 | | 30. layer |
| 2:48 | Gum Base 1525 | 40 | | |
| 2:49 | Gum Base 1525 | 40 | | |
| 2:51 | Maltisorb 75/75 | 35 | | 31. layer |
| 2:53 | Gum Base 1525 | 40 | | |
| 2:54 | Gum Base 1525 | 40 | | |
| 2:58 | Gum Base 1525 | 40 | | |
| 2:59 | Maltisorb 75/75 | 35 | | 32. layer |
| 3:01 | Gum Base 1525 | 40 | | |
| 3.02 | Gum Base 1525 | 40 | | |
| 3:04 | Gum Base 1525 | 40 | | |
| 3:07 | Maltisorb P35 | 3 x 30 | Smoothening/drying | 33. layer |
| 3:25 | | | Finish gum coating | |
| | | | Hard coating | |
| Stage (each of 5 min. | 1 | 2 | 3 | 4 |
| Addition | 25 ml. | 30 ml. | 35 ml. | 40 ml. |
| Number of layers /repetition | 5 | 15 | 30 | 5 |
| Flavour stage | 10 ml. | 2 layers | peppermint oil | |
| Final stage | 35 ml. (brix 55) | 7 layers | smoothening | |

The chewing gum produced had a smooth surface, a fine texture and good chewability. Cut-size was measured to 1.0 gr. / piece. Flavour release is comparable with traditional chewing gum. The process was conducted without any problems during every phase of the trail.

### Example 2.

During approx. 3-5 hours of active coating time, 33 layers are applied according to table 2.

**Table 2.**

| Time | Product | Amount (grams) | Comments | Layer Number |
|---|---|---|---|---|
| 0:00 | Gum Acacia solution 40% d.s. | 25 | Pre gumming | 1. pre-layer |
| 0:02 | Maltisorb P35 | 100 | | |
| 0:06 | Gum Acacia solution 40% d.s. | 25 | | 2. pre-layer |
| 0:07 | Maltisorb P35 | 100 | | |
| 0:08 | Maltisorb P35 | 100 | | |
| 0:15 | Maltisorb P35 | 50 | Pause for 2 hours | |
| 0:00 | Maltisorb 75/75 | 10 | Gum coating | 1. layer |
| 0:01 | All in Gum - SF | 25 | | |
| 0:06 | Maltisorb 75/75 | 10 | | 2. layer |
| 0:07 | All in Gum - SF | 40 | | |
| 0:12 | Maltisorb 75/75 | 10 | | 3. layer |
| 0:13 | All in Gum - SF | 40 | | |
| 0:18 | Maltisorb 75/75 | 15 | | 4. layer |
| 0:19 | All in Gum - SF | 40 | | |
| 0:24 | Maltisorb 75/75 | 15 | | 5. layer |
| 0:25 | All in Gum - SF | 40 | | |
| 0:29 | All in Gum - SF | 40 | | |
| 0:34 | Maltisorb 75/75 | 15 | | 7. layer |
| 0:35 | All in Gum - SF | 30 | | |
| 0:40 | All in Gum - SF | 30 | | |
| 0:45 | Maltisorb 75/75 | 15 | | 8. layer |
| 0:46 | All in Gum - SF | 40 | | |
| 0:49 | Maltisorb 75/75 | 15 | | 9. layer |
| 0:50 | All in Gum - SF | 45 | | |
| 0:54 | Sifting of "lumps" balling up in the back of the pan | | | |
| 0:54 | Maltisorb 75/75 | 20 | | 10. layer |
| 0:55 | Menthol powder 80% | 10 | | |
| 0:55 | All in Gum - SF | 45 | | |
| 1:00 | Maltisorb 75/75 | 20 | | 11. layer |
| 1:01 | All in Gum - SF | 45 | | |
| 1:05 | Maltisorb 75/75 | 20 | | 12. layer |
| 1:06 | All in Gum - SF | 45 | | |
| 1:11 | Maltisorb 75/75 | 20 | | 13. layer |
| 1:12 | All in Gum - SF | 45 | | |
| 1:17 | Maltisorb 75/75 | 20 | | 14. layer |
| 1:18 | All in Gum - SF | 45 | | |
| 1:23 | Maltisorb 75/75 | 20 | | 15. layer |
| 1:24 | All in Gum - SF | 45 | | |
| 1:25 | All in Gum - SF | 30 | | |
| 1:28 | Maltisorb 75/75 | 20 | | 16. layer |
| 1:29 | All in Gum - SF | 45 | | |
| 1:30 | All in Gum - SF | 30 | | |
| 1:34 | Sifting of "lumps" balling up in the back of the pan | | | |
| 1:34 | Maltisorb 75/75 | 20 | | 17. layer |
| 1:35 | All in Gum - SF | 45 | | |
| 1:36 | All in Gum - SF | 30 | | |
| 1:39 | Maltisorb 75/75 | 25 | | 18. layer |
| 1:40 | All in Gum - SF | 45 | | |
| 1:42 | Peppermint flavour | 10 | | 19. layer |
| 1:43 | All in Gum - SF | 45 | | |
| 1:48 | Maltisorb 75/75 | 25 | | 20. layer |
| 1:49 | All in Gum - SF | 45 | | |
| 1:53 | Maltisorb 75/75 | 25 | | 21. layer |
| 1:54 | All in Gum - SF | 45 | | |
| 1:55 | All in Gum - SF | 40 | | |
| 1:58 | Maltisorb 75/75 | 25 | | 22. layer |
| 1:59 | All in Gum - SF | 45 | | |
| 2:00 | All in Gum - SF | 45 | | |
| 2:03 | Sifting of "lumps" balling up in the back of the pan | | | |
| 2:03 | Maltisorb 75/75 | 30 | | 23. layer |
| 2:04 | Splenda (sucralose) | 3 | | |
| 2:05 | All in Gum - SF | 50 | | |
| 2:09 | Maltisorb 75/75 | 30 | | 24. layer |
| 2:10 | All in Gum - SF | 50 | | |
| 2:11 | All in Gum - SF | 40 | | |
| 2:15 | Maltisorb 75/75 | 30 | | 25. layer |
| 2:16 | All in Gum - SF | 50 | | |
| 2:16 | All in Gum - SF | 40 | | |
| 2:20 | Maltisorb 75/75 | 30 | | 26. layer |
| 2:21 | All in Gum - SF | 50 | | |
| 2:22 | All in Gum - SF | 40 | | |
| 2:27 | Maltisorb 75/75 | 30 | | 27. layer |
| 2:28 | Menthol powder 80% | 10 | | |
| 2:28 | All in Gum - SF | 50 | | |
| 2:29 | All in Gum - SF | 40 | | |
| 2:33 | Sifting of "lumps" balling up in the back of the pan | | | |
| 2:33 | Maltisorb 75/75 | 30 | | 28. layer |
| 2:34 | All in Gum - SF | 50 | | |
| 2:35 | All in Gum - SF | 40 | | |
| 2:39 | Peppermint flavour | 10 | | 29. layer |
| 2:40 | All in Gum - SF | 50 | | |
| 2:45 | All in Gum - SF | 50 | | |
| 2:49 | All in Gum - SF | 40 | | |
| 2:59 | Sifting of "lumps" balling up in the back of the pan | | | |
| 3:00 | Maltisorb 75/75 | 35 | | 32. layer |
| 3:01 | All in Gum - SF | 50 | | |
| 3.02 | All in Gum - SF | 50 | | |
| 3:05 | All in Gum - SF | 40 | | |
| 3:12 | Maltisorb P35 | 3 x 30 | Smoothening/drying | 33. layer |
| 3:20 | | | Finish gum coating | |
| 3:20 | Sifting of "lumps" balling up in the back of the pan | | | |
| | | | Hard coating | |

The chewing gum produced was evaluated as not usable, as the gum base was washed off the centres during the coating process and ended up in the siftings / lumps (the smaller balls in the back of the pan). The cut-size of the chewing gum was for this reason close to zero and the product can only be characterised as a coated tablet.

## Claims

1. A powdered chewing gum composition, **characterised in that** it contains over 50% w/w gum base having a softening point between 50°C and 65°C, and further **characterised in that** at least 95% w/w of the particles of the composition have a particle size of less than 1000 micron in diameter.

2. The composition according to claim 1, **characterised in that** it contains between 50% w/w and 90% w/w gum base.

3. The composition according to claim 2, **characterised in that** it contains between 70 and 85% w/w gum base.

4. The composition according to any of the preceding claims, wherein the gum base has a softening point of 58 - 62°C.

5. The composition according to any of the preceding claims, wherein at least 90% w/w of the particles of the composition have a particle size of between 150 and 250 micron.

6. The composition according to any of the preceding claims, wherein said composition is a powder which is free flowing at temperatures between 5°C and 30°C.

7. The composition according to any of the preceding claims, wherein said composition further comprises one or more of sweeteners, bulking agents, flavouring agents, colourants, antioxidants, and flow-improving agents.

8. The composition according to any of the preceding claims, consisting essentially of:
a) 50% w/w to about 99% w/w gum base,
b) about 1% w/w to about 45% w/w bulking and/or sweetening agent
c) about 0.1% w/w to about 10% w/w flavouring agent,
d) about 1% w/w to about 30% w/w talc, and optionally
e) about 0.1 % w/w to about 20% w/w of another flow improving agent

9. A chewing gum comprising a) a core compartment, b) one or more layers containing over 50% w/w gum base having a softening point between 50°C and 65°C.

10. The chewing gum according to claim 9, further comprising c) an outer layer compartment.

11. The chewing gum according to claims 9 or 10, wherein the core compartment comprises a compound selected from confectioneries, nuts, dried or fresh fruits, flavourings, Active Pharmaceutical Ingredients, or nutraceutical supplements, such as but not limited to, prebiotics, probiotic bacteria, caffeine, guarana, vitamins, minerals and enzymes.

12. Use of a composition according to any of the preceding claims 1-8 for coating a confectionery, a nutraceutical supplement, or an active pharmaceutical ingredient.

13. Use according to claim 12, **characterised in that** the coating is carried out in a standard panning apparatus.

14. A method for production of the chewing gum defined in any of claims 9-11 comprising the steps of:
(a) providing a core composition; and
(b) coating of the core composition with a composition as defined in any of claims 1-8 by use of a panning process; and optionally
(c) coating the outer intermediate layer with an outer finishing layer by use of a panning process.
